# EUROPÄISCHE PATENTSCHRIFT

(11) **EP 3 501 079 B1**
(45) Veröffentlichungstag und Bekanntmachung des Hinweises auf die Patenterteilung: **17.03.2021**
(21) Anmeldenummer: 17755469.8
(22) Anmeldetag: 15.08.2017
(51) Int. Cl.: H02J 3/28, H02J 3/40

(54) **VERFAHREN ZUR BEREITSTELLUNG VON MOMENTANRESERVE IN EINEM ELEKTRISCHEN ENERGIEVERSORGUNGSNETZ, COMPUTERPROGRAMM UND STROMEINPRÄGENDER WECHSELRICHTER**
METHOD FOR PROVIDING CURRENT RESERVES IN AN ELECTRIC ENERGY SUPPLY NETWORK, COMPUTER PROGRAM, AND CURRENT-IMPRESSING INVERTER
PROCÉDÉ DE FOURNITURE D'UNE RÉSERVE TEMPORAIRE DANS UN RÉSEAU D'ALIMENTATION EN ÉNERGIE ÉLECTRIQUE, PROGRAMME D'ORDINATEUR ET ONDULEUR COMMANDÉ EN COURANT

(30) Priorität: 16.08.2016 DE 102016115182
(43) Veröffentlichungstag der Anmeldung: 26.06.2019
(73) Patentinhaber: Technische Universität Braunschweig, 38106 Braunschweig (DE)
(72) Erfinder: LAUDAHN, Stefan, 38239 Salzgitter (DE)
(74) Vertreter: Gramm, Lins & Partner Patent- und Rechtsanwälte PartGmbB
(86) Internationale Anmeldenummer: PCT/EP2017/070673
(87) Internationale Veröffentlichungsnummer: WO 2018/033534

(56) Entgegenhaltungen:
- EP-A2- 2 738 904
- WO-A1-2011/032287
- US-A1- 2006 002 157
- US-A1- 2015 249 412

## Beschreibung

Die Erfindung betrifft ein Verfahren zur Bereitstellung von Momentanreserve in einem elektrischen Energieversorgungsnetz mittels eines stromeinprägenden Wechselrichters gemäß dem Anspruch 1. Die Erfindung betrifft ferner ein Computerprogramm zur Durchführung eines solchen Verfahrens sowie einen stromeinprägenden Wechselrichter zur geregelten Abgabe von Wechselströmen an ein Energieversorgungsnetz.

Im Zuge der Energiewende nimmt aufgrund der Reduzierung der Leistung von rotierenden Generatoren, die mit Energieversorgungsnetzen verbunden sind, die sogenannte Momentanreserve im Energieversorgungsnetz ab, wodurch Frequenzgradienten prinzipiell ansteigen können. Hierdurch ist die Netzstabilität langfristig in Frage gestellt. Als Momentanreserve bezeichnet man eine verzögerungsfreie Wirkleistungsänderung bei der Einspeisung elektrischer Energie in ein Energieversorgungsnetz aufgrund einer Frequenzänderung und/oder Frequenzgradienten in den Spannungen des Energieversorgungsnetzes. Als verzögerungsfreie Wirkleistungsänderung wird insbesondere ein Nachführen der Wirkleistung auf einen gewünschten Wert innerhalb eines Zeitraums verstanden, dessen Dauer maximal 25% der Periodendauer der spezifizierten mittleren Sollfrequenz der Wechselspannungen des Energieversorgungsnetzes beträgt.

Bisher wird die Momentanreserve aus Synchronmaschinen bereitgestellt. Synchronmaschinen kommen im Wesentlichen in konventionellen Kraftwerken zum Einsatz. Diese werden durch die Energiewende weiter unwirtschaftlicher und werden voraussichtlich langfristig durch dezentrale, erneuerbare Energiequellen ersetzt, die über Wechselrichter die elektrische Energie in das Energieversorgungsnetz einspeisen.

Prinzipiell ist es möglich, eine Momentanreserve über spannungseinprägende (netzbildende) Wechselrichter zur Verfügung zu stellen. Der Einsatz solcher spannungseinprägenden Wechselrichter zur Erbringung von Momentanreserve ist prinzipiell teurer und die einzelnen Anlagen müssen durch Impedanzen elektrisch voneinander entkoppelt werden. Zudem sind in derzeitigen Photovoltaikanlagen und Windkraftanlagen überwiegend stromeinprägende Wechselrichter im Einsatz, sodass ein Austausch gegen spannungseinprägende Wechselrichter mit hohem Aufwand verbunden wäre.

Aus der US 2006/0002157 A1 sind ein Verfahren und System zur Steuerung eines Wechselrichters mittels Frequenzsteuerung und Leistungsbalancierung bekannt.

Heute übliche stromeinprägende Wechselrichter können auf Frequenzänderungen nur mit relativ hoher Verzögerung reagieren. Bisher existiert keine Möglichkeit, Momentanreserve aus stromeinprägenden Wechselrichtern zur Verfügung zu stellen. Der Erfindung liegt die Aufgabe zugrunde, eine Lösung für dieses Problem anzugeben.

Diese Aufgabe wird durch ein Verfahren zur Bereitstellung von Momentanreserve in einem elektrischen Energieversorgungsnetz mittels eines stromeinprägenden Wechselrichters gemäß Anspruch 1 gelöst. Hierbei wird einem Stromregler des Wechselrichters ein Momentanreserve-Sollwertsignal unmittelbar oder mittelbar zugeführt, das mittels einer PLL-Regelschleife erzeugt wird, der als Eingangssignale die gemessenen Wechselspannungen des Energieversorgungsnetzes oder daraus transformierte Signale zugeführt werden, wobei das Momentanreserve-Sollwertsignal aus einem Phasenfehlersignal der PLL-Regelschleife erzeugt wird. Die Erfindung hat den Vorteil, dass nunmehr mittels eines stromeinprägenden Wechselrichters eine Momentanreserve im elektrischen Energieversorgungsnetz bereitgestellt werden kann. Die Momentanreserve kann durch den stromeinprägenden Wechselrichter mit relativ geringem technischem Aufwand bereitgestellt werden. Insbesondere ist in vielen Fällen keine Neuentwicklung des Wechselrichters oder der Austausch eines vorhandenen Wechselrichters erforderlich. In vielen Fällen kann die Erfindung in vorhandenen, bereits installierten Anlagen im Wechselrichter implementiert werden, z.B. indem dort ein Software-Update durchgeführt wird.

Die Erfindung hat den Vorteil, dass auf einfache und kostengünstige Weise die Frequenzstabilität im Energieversorgungsnetz verbessert werden kann und Frequenzgradienten begrenzt werden können.

Die Erfindung nutzt als technische Mittel zur Bereitstellung der Momentanreserve einfach realisierbare Funktionen wie eine PLL-Regelschleife, der als Eingangssignale die gemessenen Wechselspannungen des Energieversorgungsnetzes oder daraus transformierte Signale zugeführt werden. Die im Wesentlichen verzögerungsfreie Wirkleistungsänderung, die für die Bereitstellung der Momentanreserve erforderlich ist, kann insbesondere dadurch realisiert werden, dass das Momentanreserve-Sollwertsignal aus einer internen Größe der PLL-Regelschleife, nämlich einem Phasenfehlersignal, erzeugt wird, und nicht einer üblichen Ausgangsgröße einer PLL-Regelschleife, wie Frequenz und/oder Phasenlage ϕ.

Eine PLL-Regelschleife (PLL - Phase-Locked-Loop), die auch als Phasenregelschleife bezeichnet wird, ist eine Schaltung, die die Phasenlage und damit zusammenhängend die Frequenz eines oszillierenden Eingangssignals über einen geschlossenen Regelkreis so beeinflusst, dass die Phasenabweichung zwischen einem äußeren Differenzsignal und dem Oszillator oder einem daraus abgeleiteten Signal möglichst konstant ist. Eine PLL-Regelschleife muss nicht zwangsläufig zur Regelung einer Phasenlage und/oder Frequenz eingesetzt werden, sondern kann auch zur Messung einer Phasenlage und/oder Frequenz im Sinne einer Taktrückgewinnungsschaltung eingesetzt werden. Eine PLL-Regelschleife zeichnet sich insbesondere durch ihre technisch einfache Realisierbarkeit aus. Die PLL-Regelschleife kann dabei durch elektrische und/oder elektronische Schaltungskomponenten, d.h. als elektronische Schaltungsanordnung, und/oder durch Software (Computerprogramm) realisiert werden.

Gemäß einer vorteilhaften Weiterbildung der Erfindung ist vorgesehen, dass das Phasenfehlersignal als interne Zwischengröße innerhalb der Regelschleife der PLL-Regelschleife erzeugt wird. Dies hat den Vorteil, dass das für das Momentanreserve-Sollwertsignal verwendete Signal, nämlich das Phasenfehlersignal, im Wesentlichen verzögerungsfrei zur Verfügung steht.

Gemäß einer vorteilhaften Weiterbildung der Erfindung ist vorgesehen, dass das Phasenfehlersignal verzögerungsfrei oder mit einer Verzögerungszeit erzeugt wird, die wesentlich geringer ist als die Periodendauer einer spezifizierten mittleren Sollfrequenz der Wechselspannungen des Energieversorgungsnetzes. Auf diese Weise kann eine effiziente Momentanreserve bereitgestellt werden.

Gemäß der Erfindung ist vorgesehen, dass die PLL-Regelschleife die Frequenz und die Phasenlage der gemessenen Wechselspannungen des Energieversorgungsnetzes bestimmt und als Ausgangssignale bereitstellt. Die PLL-Regelschleife dient dementsprechend nicht als Regelkreis zur Regelung einer Frequenz, sondern wird im Sinne einer Taktrückgewinnungsschaltung genutzt.

Gemäß einer vorteilhaften Weiterbildung der Erfindung ist vorgesehen, dass die PLL-Regelschleife die Frequenz und die Phasenlage der gemessenen Wechselspannungen des Energieversorgungsnetzes mit einer Verzögerungszeit bestimmt, die wenigstens so groß ist wie die Periodendauer einer spezifizierten mittleren Sollfrequenz der Wechselspannungen des Energieversorgungsnetzes. Auf diese Weise kann mit wenig Aufwand das Verhalten eine am Energieversorgungsnetz angeschlossene Synchronmaschine weitgehend nachgebildet werden. Die PLL-Regelschleife kann z.B. mit einer Messzeitkonstanten in der Größenordnung von 100 Millisekunden bis 5 Sekunden realisiert werden, somit mit im Vergleich zu 50 Hertz Netzfrequenz relativ großen Werten der Messzeitkonstanten.

Gemäß einer vorteilhaften Weiterbildung der Erfindung ist vorgesehen, dass das Momentanreserve-Sollwertsignal einem dem Stromregler vorgeordneten Steuerungsblock zugeführt wird, dem weitere Eingangssignale zugeführt werden, zu denen zumindest Sollsignale der Netzfunktionen des Energieversorgungsnetzes gehören, wobei der Steuerungsblock die zugeführten Eingangssignale zu einem resultierenden Ausgangssignal zusammenführt, das dem Stromregler zugeführt wird. Auf diese Weise können mit dem erfindungsgemäßen Verfahren auch für den stabilen Betrieb des Energieversorgungsnetzes sinnvolle Netzfunktionen einbezogen werden, wie z.B. eine frequenzabhängige Wirkleistungsreduzierung oder eine statische Spannungshaltung.

Die eingangs genannte Aufgabe wird ferner gelöst durch ein Computerprogramm mit Programmcodemitteln, eingerichtet zur Durchführung eines Verfahrens der zuvor erläuterten Art, wenn das Computerprogramm auf einem Rechner eines stromeinprägenden Wechselrichters ausgeführt wird. Auch hierdurch können die zuvor erläuterten Vorteile realisiert werden.

Die eingangs genannte Aufgabe wird ferner gelöst durch einen stromeinprägenden Wechselrichter zur geregelten Abgabe von Wechselströmen an ein Energieversorgungsnetz, gemäß Anspruch 7, wobei der Wechselrichter eine Stromregelungshardware mit wenigstens einem Stromregler aufweist, der zur Regelung der abgegebenen Wechselströme auf einen oder mehrere Stromsollwerte eingerichtet ist, wobei der Wechselrichter eine Steuerungseinrichtung mit wenigstens einem Rechner und wenigstens einem Speicher aufweist und ein Computerprogramm nach dem vorhergehenden Anspruch in dem Speicher gespeichert ist, wobei der Rechner Zugriff auf den Speicher zur Ausführung des Computerprogrammes hat. Auch hierdurch können die zuvor erläuterten Vorteile realisiert werden. Hierbei wird ein Verfahren der zuvor erläuterten Art ausgeführt, wenn der Rechner das Computerprogramm ausführt.

Wie zuvor erläutert, kann die Erfindung softwaremäßig realisiert werden, d.h. durch ein Computerprogramm. Die Erfindung kann auch ganz oder teilweise durch Hardwarekomponenten realisiert werden.

Die eingangs genannte Aufgabe wird daher außerdem gelöst durch einen stromeinprägenden Wechselrichter zur geregelten Abgabe von Wechselströmen an ein Energieversorgungsnetz, gemäß Anspruch 8, wobei der Wechselrichter eine Stromregelungshardware mit wenigstens einem Stromregler aufweist, der zur Regelung der abgegebenen Wechselströme auf einen oder mehrere Stromsollwerte eingerichtet ist, wobei der Wechselrichter zur Bereitstellung von Momentanreserve in dem elektrischen Energieversorgungsnetz eingerichtet ist, indem dem Stromregler ein Momentanreserve-Sollwertsignal unmittelbar oder mittelbar zugeführt ist, das mittels einer PLL-Regelschleife erzeugt ist, der als Eingangssignale die gemessenen Wechselspannungen des Energieversorgungsnetzes oder daraus transformierte Signale zugeführt sind, wobei das Momentanreserve-Sollwertsignal aus einem Phasenfehlersignal der PLL-Regelschleife erzeugt ist. Auch hierdurch können die zuvor erläuterten Vorteile realisiert werden.

Der Wechselrichter kann insbesondere als Wechselrichter eines Batteriespeichersystems einer Photovoltaikanlage und/oder einer Windkraftanlage ausgebildet sein.

Die Erfindung wird nachfolgend anhand eines Ausführungsbeispiels unter Verwendung von Zeichnungen näher erläutert.

Es zeigen
- Figur 1: - einen stromeinprägenden Wechselrichter in Blockschaltbild-Darstellung und
- Figur 2: - Einzelheiten der Bestimmung des Momentanreserve-Sollwertsignals im Block 5 der Figur 1.

In den Figuren werden gleiche Bezugszeichen für einander entsprechende Elemente verwendet.

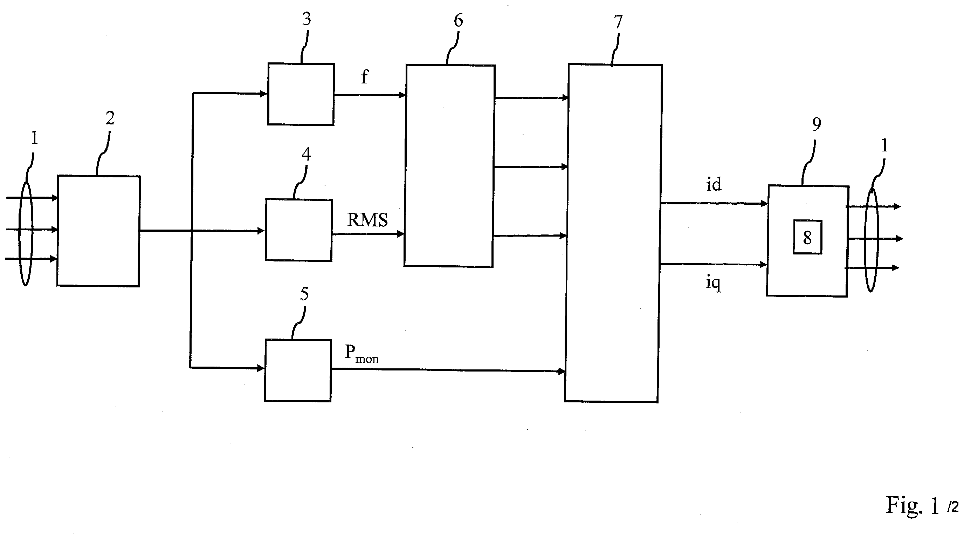

Es wird gemäß Figur 1 von einem dreiphasigen Energieversorgungsnetz 1 ausgegangen. Die Wechselspannungen der drei Phasen werden in einem Erfassungsblock 2 erfasst, d.h. gemessen und in eine in der Wechselrichtertechnik übliche Form transformiert, z.B. mittels einer Clark-Transformation. Die hierbei gebildeten Signale α und β werden vom Erfassungsblock 2 nachfolgenden Blöcken zur Verfügung gestellt. Zu diesen nachfolgenden Blöcken gehört ein Frequenzerfassungsblock 3. Im Frequenzerfassungsblock 3 wird die aktuelle Frequenz der Wechselspannungen des Energieversorgungsnetzes 1 bestimmt, z.B. mittels einer schnellen PLL-Regelschleife, die als Taktrückgewinnungseinrichtung betrieben wird. In einem Effektivwertbestimmungsblock 4 wird zudem der Effektivwert (RMS - Root Mean Square) der erfassten Wechselspannungen bestimmt.

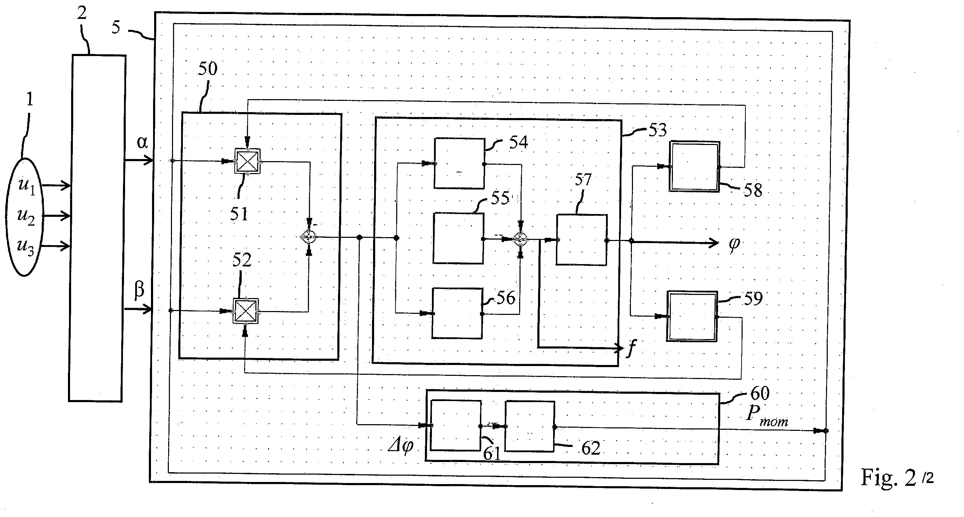

Erfindungsgemäß wird in einem Block 5 ein Momentanreserve-Sollwertsignal Pₘₒₘ aus einem Phasenfehlersignal einer dort ausgeführten PLL-Regelschleife erzeugt. Dies wird nachfolgend anhand der Figur 2 noch näher erläutert.

Vom Block 3 wird ein Frequenzsignal f einem Block 6 zugeführt. Vom Block 4 wird ein Effektivwertsignal RMS dem Block 6 zugeführt. Im Block 6 werden bestimmte Netzfunktionen realisiert und ausgeführt, z.B. eine frequenzabhängige Wirkleistungsreduzierung und/oder eine statische Spannungshaltung. Hierbei werden Ausgangssignale erzeugt, die einem Block 7 zugeführt werden. Dem Block 7 wird zudem das Momentanreserve-Sollwertsignal Pₘₒₘ vom Block 5 zugeführt. Im Block 7 werden die zugeführten Eingangssignale zusammengeführt. Es wird beispielsweise eine Priorisierung der Eingangssignale bezüglich der vom Block 7 abgegebenen Ausgangssignale durchgeführt, ferner kann eine Limitierung der Eingangssignale auf Grenzwerte erfolgen. Ferner kann eine Addierung aller oder einiger Eingangssignale erfolgen.

Der Block 7 erzeugt als Ausgangssignale zwei Stromanteile in der in der Energieversorgungstechnik üblichen Darstellung, nämlich den Längsstrom i_{d} und dem Querstrom i_{q}, durch die die Phasenströme in Rotorkoordinaten wiedergegeben werden. Diese Ausgangssignale des Blocks 7 werden einer Stromregelungshardware 9 mit integriertem Stromregler 8 zugeführt. Der Stromregler 8, der z.B. als PI-Regler ausgeführt werden kann, kann softwaremäßig und/oder hardwaremäßig realisiert sein. Die Stromregelungshardware 9 ist z.B. eine mit Halbleiterschaltern ausgebildete Wechselrichterhardware, die wiederum mit den Leitungen des Energieversorgungsnetzes 1 verbunden ist. Der Wechselrichterhardware 9 wird ferner die in Wechselströme umzuwandelnde elektrische Eingangs-Energie über Leitungen zugeführt, was in der Figur 1 zur Vereinfachung nicht dargestellt ist. Die elektrische Eingangs-Energie steht z.B. in Form von Gleichstrom oder Gleichspannung zur Verfügung und wird z.B. von einem Batteriespeicher, einer Photovoltaikanlage und/oder einer Windenergieanlage bereitgestellt.

Wie in der Figur 2 erkennbar ist, werden dem Block 5 die Signale α, β aus dem Erfassungsblock 2 zugeführt. Diese werden zunächst in einer Eingangsstufe 50 in Multiplizierern 51, 52 mit Signalen multipliziert, von Ausgangsmodulatoren 58, 59 zugeführt werden. Zwischen den Ausgangssignalen der Multiplizierer 51, 52 wird ein Differenzsignal gebildet, das ein Phasenfehlersignal Δϕ der durch den Block 5 realisierten PLL-Regelschleife darstellt. Das Phasenfehlersignal Δϕ wird einem Regelblock 53 zugeführt.

Die PLL-Regelschleife wird durch den Regelblock 53 vervollständigt, in dem ein Regler mit den Blöcken 54, 55, 56, 57 vorhanden ist. Im Block 54 kann z.B. ein Proportionalglied realisiert sein, im Block 55 kann ein konstanter Offsetwert bereitgestellt werden, im Block 56 kann ein Integral-Glied vorhanden sein. Auf diese Weise kann ein PI-Regler mit konstantem Offset realisiert werden. Die Ausgangssignale der Blöcke 54, 55, 56 werden aufsummiert, wodurch ein Frequenzsignal f erzeugt ist. Dieses Frequenzsignal f wird im Block 57 in ein Phasensignal ϕ gewandelt und als Ausgangssignal der PLL-Regelschleife bereitgestellt. Das Phasensignal ϕ wird einem Sinus-Modulator 58 und einem Cosinus-Modulator 59 zugeführt. Das Ausgangssignal des Sinus-Modulators 58 wird zurückgeführt zum Multiplizierer 51. Das Ausgangssignal des Cosinus-Modulators 59 wird zurückgeführt zum Multiplizierer 52.

Erfindungsgemäß wird das Momentanreserve-Sollwertsignal Pₘₒₘ über einen Block 60 aus dem Phasenfehlersignal Δϕ erzeugt. Im Block 61 kann z.B. eine Multiplikation mit einem konstanten Faktor und im Block 62 eine Wertebereichs-Limitierung erfolgen.

## Patentansprüche

1. Verfahren zur Bereitstellung von Momentanreserve in einem elektrischen Ener-(9), gieversorgungsnetz (1) mittels eines stromeinprägenden Wechselrichters wobei einem Stromregler (8) des Wechselrichters (9) ein Momentanreserve-Sollwertsignal (Pₘₒₘ) unmittelbar oder mittelbar zugeführt wird, das mittels einer PLL-Regelschleife (5) erzeugt wird, der als Eingangssignale die gemessenen Wechselspannungen des Energieversorgungsnetzes (1) oder daraus transformierte Signale (α, β) zugeführt werden, und die die Frequenz und die Phasenlage der gemessenen Wechselspannungen des Energieversorgungsnetzes (1) bestimmt und als Ausgangssignale (f, cp) bereitstellt, wobei das Momentanreserve-Sollwertsignal (Pₘₒₘ) aus einer internen Größe der PLL-Regelschleife (5), nämlich einem Phasenfehlersignal (Δcp), und nicht aus einer der Ausgangsgrößen der PLL-Regelschleife (5), nämlich Frequenz und/oder Phasenlage, erzeugt wird.

2. Verfahren nach dem vorhergehenden Anspruch, **dadurch gekennzeichnet, dass** das Phasenfehlersignal (Δϕ) als interne Zwischengröße innerhalb der Regelschleife der PLL-Regelschleife (5) erzeugt wird.

3. Verfahren nach einem der vorhergehenden Ansprüche, **dadurch gekennzeichnet, dass** das Phasenfehlersignal (Δϕ) verzögerungsfrei oder mit einer Verzögerungszeit erzeugt wird, die wesentlich geringer ist als die Periodendauer einer spezifizierten mittleren Sollfrequenz der Wechselspannungen des Energieversorgungsnetzes (1).

4. Verfahren nach dem vorhergehenden Anspruch, **dadurch gekennzeichnet, dass** die PLL-Regelschleife (5) die Frequenz und die Phasenlage der gemessenen Wechselspannungen des Energieversorgungsnetzes (1) mit einer Verzögerungszeit bestimmt, die wenigstens so groß ist wie die Periodendauer einer spezifizierten mittleren Sollfrequenz der Wechselspannungen des Energieversorgungsnetzes (1).

5. Verfahren nach einem der vorhergehenden Ansprüche, **dadurch gekennzeichnet, dass** das Momentanreserve-Sollwertsignal (Pₘₒₘ) einem dem Stromregler (8) vorgeordneten Steuerungsblock (7) zugeführt wird, dem weitere Eingangssignale zugeführt werden, zu denen zumindest Sollsignale der Netzfunktionen des Energieversorgungsnetzes (1) gehören, wobei der Steuerungsblock (7) die zugeführten Eingangssignale zu einem resultierenden Ausgangssignal zusammenführt, das dem Stromregler (8) zugeführt wird.

6. Computerprogramm mit Programmcodemitteln, eingerichtet zur Durchführung eines Verfahrens nach einem der vorhergehenden Ansprüche, wenn das Computerprogramm auf einem Rechner eines stromeinprägenden Wechselrichters (9) ausgeführt wird.

7. Stromeinprägender Wechselrichter (9) zur geregelten Abgabe von Wechselströmen an ein Energieversorgungsnetz (1), wobei der Wechselrichter (9) eine Stromregelungshardware mit wenigstens einem Stromregler (8) aufweist, der zur Regelung der abgegebenen Wechselströme auf einen oder mehrere Stromsollwerte eingerichtet ist, **dadurch gekennzeichnet, dass** der Wechselrichter eine Steuerungseinrichtung mit wenigstens einem Rechner und wenigstens einem Speicher aufweist und ein Computerprogramm nach dem vorhergehenden Anspruch in dem Speicher gespeichert ist, wobei der Rechner Zugriff auf den Speicher zur Ausführung des Computerprogrammes hat.

8. Stromeinprägender Wechselrichter (9) zur geregelten Abgabe von Wechselströmen an ein Energieversorgungsnetz (1), wobei der Wechselrichter (9) eine Stromregelungshardware mit wenigstens einem Stromregler (8) aufweist, der zur Regelung der abgegebenen Wechselströme auf einen oder mehrere Stromsollwerte eingerichtet ist, **dadurch gekennzeichnet, dass** der Wechselrichter zur Bereitstellung von Momentanreserve in dem elektrischen Energieversorgungsnetz eingerichtet ist, indem dem Stromregler (8) der Stromregelungshardware ein Momentanreserve-Sollwertsignal (Pₘₒₘ) unmittelbar oder mittelbar zugeführt ist, das mittels einer PLL-Regelschleife (5) erzeugt ist, der als Eingangssignale die gemessenen Wechselspannungen des Energieversorgungsnetzes (1) oder daraus transformierte Signale (α, β) zugeführt sind, und die die Frequenz und die Phasenlage der gemessenen Wechselspannungen des Energieversorgungsnetzes (1) bestimmt und als Ausgangssignale (f, cp) bereitstellt, wobei das Momentanreserve-Sollwertsignal (Pₘₒₘ) aus einem internen Signal der PLL-Regelschleife (5), nämlich aus einem Phasenfehlersignal (Δϕ) der PLL-Regelschleife (5) erzeugt ist, und nicht aus einer der Ausgangsgrößen der PLL-Regelschleife (5), nämlich Phasenlage und Frequenz.

9. Wechselrichter nach Anspruch 7 oder 8, **dadurch gekennzeichnet, dass** der Wechselrichter (10) ein Wechselrichter einer Photovoltaikanlage und/oder einer Windkraftanlage ist.

## Claims

1. Method for providing an instantaneous reserve in an electrical energy supply grid (1) by way of a current-impressing inverter (9), wherein an instantaneous reserve setpoint value signal (Pₘₒₘ) is supplied directly or indirectly to a current regulator (8) of the inverter (9), this instantaneous reserve setpoint value signal being generated by way of a PLL control loop (5) to which the measured AC voltages of the energy supply grid (1) or signals (α, β) transformed therefrom are supplied as input signals, and which determines the frequency and the phase angle of the measured AC voltages of the energy supply grid (1) and provides them as output signals (f, cp), wherein the instantaneous reserve setpoint value signal (Pₘₒₘ) is generated from an internal variable of the PLL control loop (5), specifically a phase error signal (Δϕ), and not from one of the output variables of the PLL control loop (5), specifically frequency and/or phase angle.

2. Method according to the preceding claim, **characterized in that** the phase error signal (Δϕ) is generated within the control loop of the PLL control loop (5) as an internal intermediate variable.

3. Method according to either of the preceding claims, **characterized in that** the phase error signal (Δϕ) is generated without any delay or with a delay time that is significantly shorter than the period duration of a specified average setpoint frequency of the AC voltages of the energy supply grid (1).

4. Method according to the preceding claim, **characterized in that** the PLL control loop (5) determines the frequency and the phase angle of the measured AC voltages of the energy supply grid (1) with a delay time that is at least as great as the period duration of a specified average setpoint frequency of the AC voltages of the energy supply grid (1).

5. Method according to one of the preceding claims, **characterized in that** the instantaneous reserve setpoint value signal (Pₘₒₘ) is supplied to a control block (7) arranged upstream of the current regulator (8) and to which further input signals are supplied, including at least setpoint signals of the grid functions of the energy supply grid (1), wherein the control block (7) combines the supplied input signals to form a resultant output signal that is supplied to the current regulator (8).

6. Computer program containing program code means designed to perform a method according to one of the preceding claims when the computer program is executed on a computer of a current-impressing inverter (9).

7. Current-impressing inverter (9) for the regulated output of AC currents to an energy supply grid (1), wherein the inverter (9) has current regulation hardware having at least one current regulator (8) that is designed to regulate the output AC currents to one or more current setpoint values, **characterized in that** the inverter has a control apparatus having at least one computer and at least one memory and a computer program according to the preceding claim is stored in the memory, wherein the computer has access to the memory in order to execute the computer program.

8. Current-impressing inverter (9) for the regulated output of AC currents to an energy supply grid (1), wherein the inverter (9) has current regulation hardware having at least one current regulator (8) that is designed to regulate the output AC currents to one or more current setpoint values, **characterized in that** the inverter is designed to provide an instantaneous reserve in the electrical energy supply grid by virtue of an instantaneous reserve setpoint value signal (Pₘₒₘ) being supplied directly or indirectly to the current regulator (8) of the current regulation hardware, this instantaneous reserve setpoint value signal being generated by way of a PLL control loop (5) to which the measured AC voltages of the energy supply grid (1) or signals (α, β) transformed therefrom are supplied as input signals, and which determines the frequency and the phase angle of the measured AC voltages of the energy supply grid (1) and provides them as output signals (f, cp), wherein the instantaneous reserve setpoint value signal (Pₘₒₘ) is generated from an internal signal of the PLL control loop (5), specifically from a phase error signal (Δϕ) of the PLL control loop (5), and not from one of the output variables of the PLL control loop (5), specifically phase angle and frequency.

9. Inverter according to Claim 7 or 8, **characterized in that** the inverter (10) is an inverter of a photovoltaic installation and/or of a wind turbine.

## Revendications

1. Procédé de fourniture d'une réserve instantanée dans un réseau d'alimentation en énergie (1) au moyen d'un onduleur (9) à application de courant, un régulateur de courant (8) de l'onduleur (9) étant alimenté directement ou indirectement avec un signal de consigne de réserve instantanée (Pₘₒₘ) qui est généré au moyen d'une boucle de régulation PLL (5) à laquelle sont amenés comme signaux d'entrée les tensions alternatives mesurées du réseau d'alimentation en énergie (1) ou des signaux (α, β) transformés à partir de celles-ci, et qui détermine la fréquence et la position de phase des tensions alternatives mesurées du réseau d'alimentation en énergie (1) et les fournissent comme signaux de sortie (f, cp), le signal de consigne de réserve instantanée (Pₘₒₘ) étant généré à partir d'une grandeur interne dans la boucle de régulation PLL (5), à savoir un signal d'erreur de phase (Δϕ), et non à partir d'une des grandeurs de sortie de la boucle de régulation PLL (5), à savoir la fréquence et/ou la position de phase.

2. Procédé selon la revendication précédente, **caractérisé en ce que** le signal d'erreur de phase (Δϕ) est généré comme grandeur intermédiaire interne à l'intérieur de la boucle de régulation de la boucle de régulation PLL (5).

3. Procédé selon l'une des revendications précédentes, **caractérisé en ce que** le signal d'erreur de phase (Δϕ) est généré sans retard ou avec un temps de retard nettement inférieur à la période d'une fréquence de consigne moyenne spécifiée des tensions alternatives du réseau d'alimentation en énergie (1).

4. Procédé selon la revendication précédente, **caractérisé en ce que** la boucle de régulation PLL (5) détermine la fréquence et la position de phase des tensions alternatives mesurées du réseau d'alimentation en énergie (1) avec un temps de retard qui est au moins égal à la période d'une fréquence de consigne moyenne spécifiée des tensions alternatives du réseau d'alimentation en énergie (1).

5. Procédé selon l'une des revendications précédentes, **caractérisé en ce que** le signal de consigne de réserve instantanée (Pₘₒₘ) est amené à un bloc de commande (7) qui est disposé en amont du régulateur de courant (8) et auquel sont amenés d'autres signaux d'entrée auxquels appartiennent au moins des signaux de consigne des fonctions de réseau du réseau d'alimentation en énergie (1), le bloc de commande (7) combinant les signaux d'entrée amenés pour former un signal de sortie résultant qui est amené au régulateur de courant (8).

6. Logiciel comprenant des moyens de code de programme, conçus pour mettre en œuvre un procédé selon l'une des revendications précédentes lorsque le logiciel est exécuté sur un calculateur d'un onduleur à application de courant (9).

7. Onduleur à application de courant (9) destiné à délivrer de manière régulée des courants alternatifs à un réseau d'alimentation en énergie (1), l'onduleur (9) comportant un matériel de régulation de courant comprenant au moins un régulateur de courant (8) qui est conçu pour réguler les courants alternatifs délivrés à une ou plusieurs valeurs de consigne de courant, **caractérisé en ce que** l'onduleur comporte un moyen de commande pourvu d'au moins un calculateur et d'au moins une mémoire et un logiciel selon la revendication précédente est mémorisé dans la mémoire, le calculateur ayant accès à la mémoire pour exécuter le logiciel.

8. Onduleur à application de courant (9) destiné à délivrer de manière régulée des courants alternatifs à un réseau d'alimentation en énergie (1), l'onduleur (9) comportant un matériel de régulation de courant pourvu d'au moins un régulateur de courant (8) qui est conçu pour réguler les courants alternatifs délivrés à une ou plusieurs valeurs de consigne de courant, **caractérisé en ce que** l'onduleur est conçu pour fournir une réserve instantanée dans le réseau d'alimentation en énergie électrique en amenant directement ou indirectement au régulateur de courant (8) du matériel de régulation de courant un signal de consigne de réserve instantanée (Pₘₒₘ) qui est généré au moyen d'une boucle de régulation PLL (5), à laquelle sont amenées les tensions alternatives mesurées du réseau d'alimentation en énergie (1) ou des signaux (α, β) transformés à partir de celles-ci, et qui détermine la fréquence et la position de phase des tensions alternatives mesurées du réseau d'alimentation en énergie (1) et les fournit comme signaux de sortie (f, cp), le signal de valeur de consigne de réserve instantanée (Pₘₒₘ) étant généré à partir d'un signal interne de la boucle de régulation PLL (5), à savoir à partir d'un signal d'erreur de phase (Δϕ) de la boucle de régulation PLL (5), et non à partir d'une des grandeurs de sortie de la boucle de régulation PLL (5), à savoir la position de phase et la fréquence.

9. Onduleur selon la revendication 7 ou 8, **caractérisé en ce que** l'onduleur (10) est un onduleur d'une installation photovoltaïque et/ou d'une éolienne.
